# EUROPEAN PATENT APPLICATION

(11) **EP 2 355 051 A1**
(43) Date of publication of application: **10.08.2011**
(21) Application number: 10165971.2
(22) Date of filing: 15.06.2010
(51) Int. Cl.: G07C 9/00, G07F 7/10, G06F 21/00, H04L 9/32

(54) **Wireless fingerprint card**

(30) Priority: 05.01.2010 HK 10100047
(71) Applicant: Shining Union Limited, Tsuen Wan Hong Kong TWTL 353 (CN)
(72) Inventor: Wong, Kwok Fong, Tsuen Wan Hongkong TWTL 353 (CN); Ching, Pui Yi, Tsuen Wan Hongkong TWTL 353 (CN)
(74) Representative: Johansson, Lars-Erik

(57) **Abstract**

A wireless fingerprint card comprises a CPU, a fingerprint scanning device, a fingerprint identification device, a wireless communication device, an information input device and a storage device. The fingerprint identification device, the wireless communication device, the information input device and the storage device are coupled to the CPU respectively, and the fingerprint scanning device is coupled to the fingerprint identification device. The fingerprint scanning device scans fingerprint of users and transmits scanned fingerprint data to the fingerprint identification device, and the latter compares the scanned fingerprint data to fingerprint data stored in the storage device and send a matching signal to the CPU if the fingerprint data match each other. Then, the CPU sends an information input command to the information input device and transmits information input from the information input device to a transaction terminal through the wireless communication device according to the matching signal.

## Description

### FIELD OF THE INVENTION

The present invention relates to the field of sensing technology and wireless communication technology, and more particularly to a wireless fingerprint card.

### BACKGROUND OF THE INVENTION

In our daily life and work, many kinds of cards, such as credit cards, bankcards, etc. are often used. Such cards are usually identified by magnetic stripes, and users could only access machines after inputting passwords. However, if a card and the corresponding password are stolen, it is not possible to determine whether the holder of the card is the real owner. The holder of the card might take illegal action with the card, such as making withdrawal, credit purchase and so on, which would incur a serious harm to the society.

In addition, traditional wireless fingerprint cards are all operated through public keyboards of ATM or POS, which is difficult to ensure public hygiene.

### SUMMARY OF THE INVENTION

The object of the present invention is to provide a wireless fingerprint card to ensure the property safety of authorized users through fingerprint identification.

To achieve the above object, the present invention provides a wireless fingerprint card. The wireless fingerprint card may comprise a CPU, a fingerprint scanning device, a fingerprint identification device, a wireless communication device, an information input device and a storage device, in which the fingerprint identification device, the wireless communication device, the information input device and the storage device are coupled to the CPU respectively, and the fingerprint scanning device is coupled to the fingerprint identification device; the fingerprint scanning device scans fingerprint of users and transmits scanned fingerprint data to the fingerprint identification device, and the fingerprint identification device compares the scanned fingerprint data to fingerprint data stored in the storage device and send a matching signal to the CPU if the scanned fingerprint data match the stored fingerprint data, and then the CPU sends an information input command to the information input device and transmits information input from the information input device to a transaction terminal through the wireless communication device according to the matching signal.

The technology effects of the present invention are as follows. The fingerprint identification ensures that only the authorized user of the wireless fingerprint card could conduct transactions via the wireless fingerprint card. The authorized user could input information through the keyboard of the wireless fingerprint card instead of through the public keyboard of the public ATM, therefore it would be of hygiene.

### BRIEF DESCRIPTION OF THE DRAWINGS

The present invention will be described in detail with reference to the accompanying drawings. The figures are for illustration purposes only and should not be construed as limitation to the protective scope of the present invention, in which,
Fig. 1 is a schematic view of the configuration of an embodiment of the wireless fingerprint card according to the present invention;
Fig. 2 is a schematic view illustrating the structure of the embodiment of the wireless fingerprint card according to the present invention;
Fig. 3 is a schematic view illustrating the structure of another embodiment of the wireless fingerprint card according to the present invention;
Fig. 4 is a schematic view illustrating the structure of a further embodiment of the wireless fingerprint card according to the present invention;
Fig. 5 is a top plan view of the external structure of the wireless fingerprint card according to the present invention;
Fig. 6 is a bottom plan view of the external structure of the wireless fingerprint card according to the present invention;
Fig. 7 is a schematic view of the configuration of a storage device of an embodiment according to the present invention; and
Fig. 8 is a schematic view of the position of batteries of an embodiment of the wireless fingerprint card according to the present invention.

### DETAILED DESCRIPTION OF THE INVENTION

The technical features, objects and effects of the present invention will be better understood by the skilled in this art from the detailed description of the preferred embodiments of the present invention in conjunction with the accompanying drawings. Exemplary embodiments of the present application and the description thereof are for illustration purpose only, and should not be construed as limitation to the protective scope of the present invention.

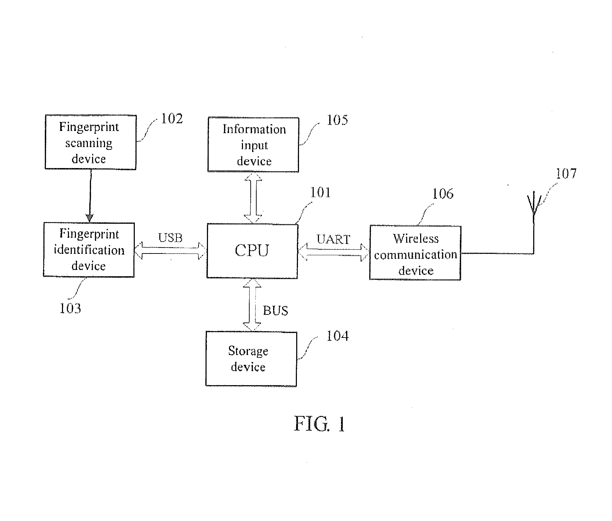

Fig. 1 is a schematic view of the configuration of an embodiment of the wireless fingerprint card according to the present invention. As shown in Fig. 1, the wireless fingerprint card comprises a CPU 101, a fingerprint scanning device 102, a fingerprint identification device 103, a storage device 104, an information input device 105 and a wireless communication device 106. The wireless fingerprint card further comprises a printed circuit board for mounting the above-mentioned devices thereon. The wireless communication device 106 may be a bluetooth communication module.

The fingerprint identification device 103, the storage device 104, the information input device 105 and the wireless communication device 106 are coupled to CPU respectively. The fingerprint scanning device 102 is coupled to the fingerprint identification device 103. The fingerprint identification device 103 may be coupled to the CPU via a USB interface, while the storage device 104 may be coupled to the CPU via a bus, and the wireless communication device 106 may be coupled to the CPU via a UART interface. However, the present invention is not limited to the configuration mentioned above.

The fingerprint scanning device 102 transmits scanned fingerprint data to the fingerprint identification device 103, and then the latter would compare the scanned fingerprint data to fingerprint data stored in the storage device 104. If the scanned fingerprint data match the stored fingerprint data, the fingerprint identification device 103 would send a matching signal to the CPU 101, and the latter would send an information input command to the information input device 105 and transmit information input from the information input device 105 to a transaction terminal through an antenna 107 of the wireless communication device 106 according to the matching signal. The information input device 105 includes a plurality of touch-sensitive buttons made of capacitive sensors. The information is input by pressing the touch-sensitive buttons.

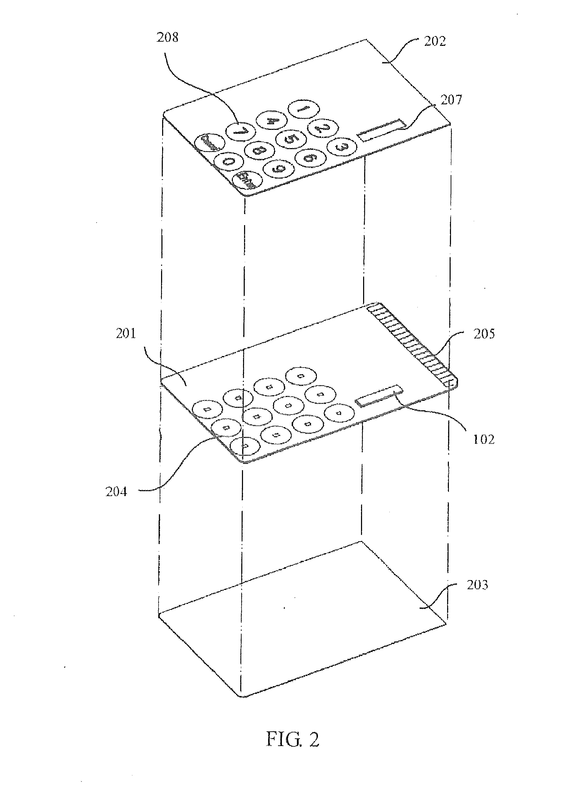

The wireless fingerprint card may further comprise a housing provided outside the printed circuit board. Fig. 2 is a schematic view illustrating the structure of the embodiment of the wireless fingerprint card according to the present invention. As shown in Fig. 2, the housing includes an upper housing 202 and a base housing 203 sandwiching the printed circuit board 201 of the wireless fingerprint card therebetween. The housing may be made of a Mylar film. However, the present invention is not limited to this configuration.

The fingerprint scanning device 102 is fixed on the printed circuit board 201 and extends upwards therefrom. The information input device 105 includes a plurality of touch-sensitive buttons 204 made of capacitive sensors. The wireless fingerprint card may further comprises a power input device 205 coupled to the CPU. The power input device 205 is metal touch pad. However, the present invention is not limited to this configuration.

The size of the housing is slightly smaller than that of the printed circuit board 201, to enable the metal touch pad to extend out of the housing. The metal touch pad 205 may be connected to an external power supply device outside the wireless fingerprint card to supply power to the wireless fingerprint card. Therefore, it is not necessary to provide batteries with the wireless fingerprint card to lower the weight of the latter. The external power supply device outside the wireless fingerprint card may be a wireless energy receiver, a rechargeable power supply, etc. However, the present invention is not limited to this configuration.

The upper housing 202 includes a rectangle aperture 207 the size of which is the same to that of the fingerprint scanning device 102, to enable to contain the fingerprint scanning device 102 therein. The upper housing 202 may further comprise an input keyboard 208, and a plurality of numerical or alphabetic characters are printed on the input keyboard. Each of the numerical or alphabetic characters corresponds to one of the touch-sensitive buttons 204 respectively. Users input information, such as passwords and/or transaction value, through the input keyboard 208. The housing may be made of Mylar film. However, the present invention is not limited to this configuration.

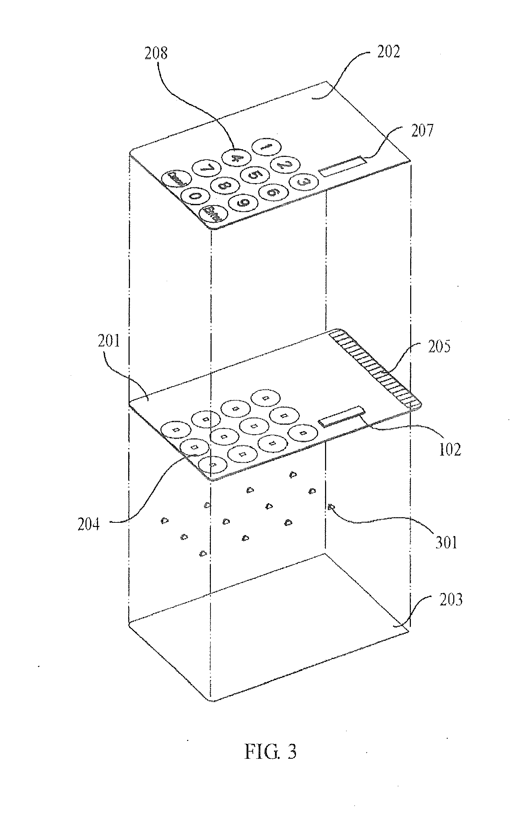

Fig. 3 is a schematic view illustrating the structure of another embodiment of the wireless fingerprint card according to the present invention. As shown in Fig. 3, the wireless fingerprint card may further comprise one or more light emitting diodes (LEDs) 301. The LEDs 301 are provided below the touch-sensitive button 204 for illuminating the characters on the housing, which make it convenient to input information.

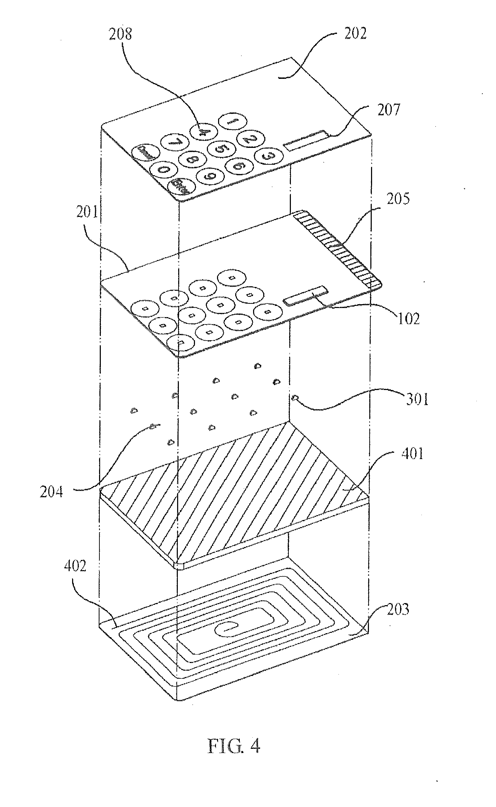

Fig. 4 is a schematic view illustrating the structure of a further embodiment of the wireless fingerprint card according to the present invention. As shown in Fig. 4, the wireless fingerprint card may further comprise a charge module 401 connected to the CPU, the fingerprint scanning device, the fingerprint identification device, the wireless communication device, the information input device and the storage device for supplying power. The charge module 401 could supply power to the wireless fingerprint card. The wireless fingerprint card may further comprise a coil 402 connected to the charge module 401. The charge module 401 and the coil 402 constitute an energy receiver for receiving energy from an energy transmitter. The energy receiver may further comprise a control module and a rectifying circuit.

The energy transmitter may comprise a magnet capable of generating a time-varying magnetic field and a transmitter coil. The time-varying magnetic filed generated by the magnet could generate an induced current in the transmitter coil. The induced current could be stored into a tank circuit by a multiplexer.

When the energy transmitter determines that the resonant circuit of the energy receiver is in a predetermined frequency, it would transmit the energy stored in the tank circuit to the energy receiver. The energy received by the energy receiver would generate a primary current in the coil 402. The primary current could be rectified by the rectifying circuit under the control of the control module, and be input to charge module 401 as a direct current. As a result, the wireless fingerprint card could be supplied with power.

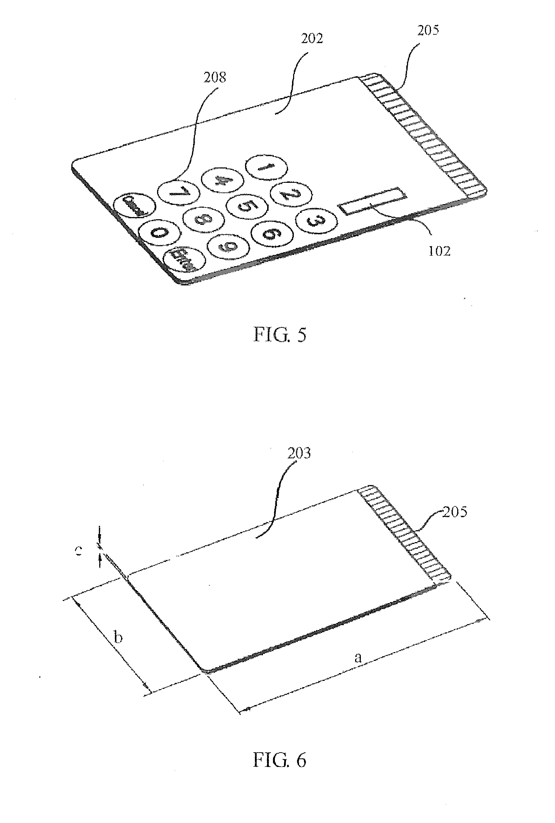

Fig. 5 is a top plan view of the external structure of the wireless fingerprint card according to the present invention. As shown in Fig. 5, the metal touch pad is exposed out of the housing. Users could input transaction information by virtue of the input keyboard 208. After the fingerprint of a user is identified, the LEDs 301 would emit light to illuminate the numerical and alphabetic characters on the input keyboard 208. The user could input the password under the illumination of the light emitted from the LEDs 301, to enable to conduct a transaction.

Fig. 6 is a bottom plan view of the external structure of the wireless fingerprint card according to the present invention. The length, width and thickness of the wireless fingerprint card are indicated as a, b and c respectively. For example, the a, b and c are 85.0mm, 53.9mm and 1.3mm respectively. However, the present invention is not limited to this configuration. The thickness of the wireless fingerprint card is about 2 times of the thickness of command credit cards or bank cards, which would not affect the convenience for taking the wireless fingerprint card.

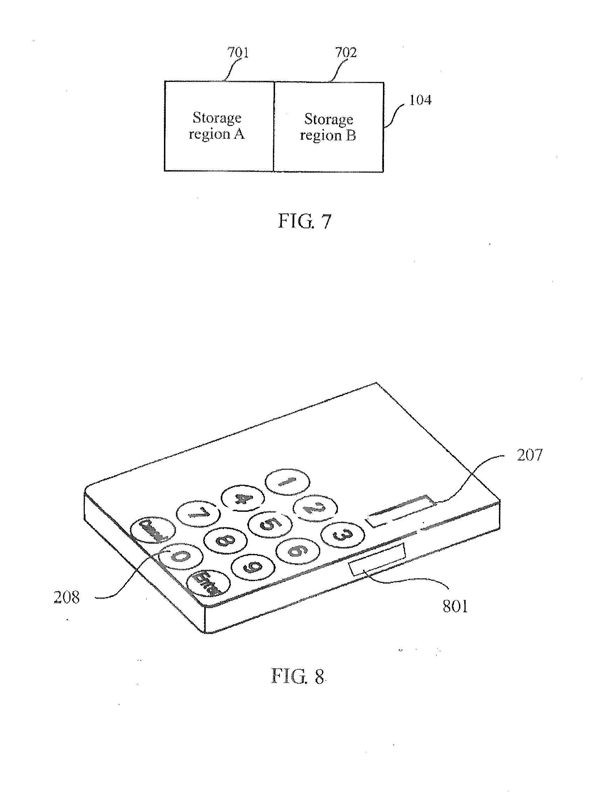

The storage device 104 includes a storage region A (public storage unit) 701 and a storage region B (secure storage unit) 702. The CPU 101 is electrically connected to the storage region A 701 and the storage region B 702. As shown in Fig. 7, the data stored in the storage region A 701 are public data, such as information on bank card numbers, sequence numbers of transactions, etc. The data stored in the storage region B 702 are data on authorized users, such as fingerprint information of authorized users, account balance, passwords. Only authorized users who pass through fingerprint identification could see their own data. A microelectronic switch (not shown in the figures) is provided between the storage region B 702 and the CPU 101. When the fingerprint data of the current user match the fingerprint data stored in the storage device 104, the CPU 101 closes the microelectronic switch, and then the authorized user could access the information stored in the storage region B 702.

The data on authorized users could be transmitted to an ATM through the antenna 107. When a holder of a wireless fingerprint card is approaching an ATM, the data on authorized user could be communicated to the ATM wirelessly. The wireless communication between a wireless fingerprint card and an ATM is similar to inserting a common electronic card into a card reader slot of the ATM.

After the wireless communication between the wireless fingerprint card and the ATM is established, a LED of the fingerprint scanning device 102 would emit light, and then the holder of the wireless fingerprint card could input his fingerprint data through the fingerprint scanning device 102.

After the fingerprint scanning device 102 detects the fingerprint data of the current holder, it would transmit the detected fingerprint data to the fingerprint identification device 103. The fingerprint identification 103 compares the fingerprint data received from the fingerprint scanning device 102 to the fingerprint data stored in the storage device 104, and determine whether those fingerprint data match each other. If not, it indicates that the current holder is an unauthorized user. If yes, it indicates that the current holder is an authorized user, and the fingerprint identification device 103 would transmit a matching signal to the CPU 101. If the CPU 101 receives the matching signal from the fingerprint identification device 103, it would close the microelectronic switch connected to the storage region B 702. Then, the user could access the data on the authorized user stored in the storage region B 702. At the same time, the CPU 101 would turn on the LEDs under the touch-sensitive button 204, to conduct the user to input information, such as password and account balance, through the input keyboard 208. The authorized user may conduct a transaction according to the information displayed in the ATM by the storage region B 702. For example, the account balance, such as $3000, or a reminder on changing password, could be displayed on the display screen of the ATM. When the user inputs information through the input keyboard 208, the touch-sensitive buttons of the input keyboard 208 would transmit the information input by the user to the CPU 101.

If the fingerprint data of the holder do not match the fingerprint data stored in the storage device 104, it indicates that the holder is not an authorized user. Then, the CPU 101 would not close the microelectronic switch connected to the storage region B 702, and the LEDs would not be turned on to conduct the user to input information through the input keyboard 208. In another word, the input keyboard 208 could not be operated at that time. Therefore, the information and property of the authorized user of the wireless fingerprint card could be kept safe.

In another embodiment of the present invention, batteries could be provided with the wireless fingerprint card for supplying power to the latter. When the external power supply device outside the wireless fingerprint card could not supply power to the wireless fingerprint card through the metal touch pad, the batteries could be used as a backup power source. As shown in Fig. 8, batteries 801 could be mounted at the side of the wireless fingerprint card. However, the present invention is not limited to this configuration.

The present invention has the following technical effects. The fingerprint identification ensures that only the authorized user of the wireless fingerprint card could conduct transactions via the wireless fingerprint card. The authorized user could input information through the keyboard of the wireless fingerprint card instead of through the public keyboard of the public ATM, therefore it would be of hygiene. By virtue of technology on wireless power transmission, the batteries in the wireless fingerprint card do not need to be exchange often, therefore the service life of the wireless fingerprint card could be prolonged.

Although the description of the present invention is made with reference to the preferred embodiments, the present invention is not limited to these embodiments. Various modifications and changes can be made to the invention by those skilled in the art without departing from the spirit and scopes of the present invention.

## Claims

1. A wireless fingerprint card comprising a CPU, a fingerprint scanning device, a fingerprint identification device, a wireless communication device, an information input device and a storage device, wherein:
the fingerprint identification device, the wireless communication device, the information input device and the storage device are coupled to the CPU respectively, and the fingerprint scanning device is coupled to the fingerprint identification device;
the fingerprint scanning device scans fingerprint of users and transmits scanned fingerprint data to the fingerprint identification device, and the fingerprint identification device compares the scanned fingerprint data to fingerprint data stored in the storage device and send a matching signal to the CPU if the scanned fingerprint data match the stored fingerprint data, and then the CPU sends an information input command to the information input device and transmits information input from the information input device to a transaction terminal through the wireless communication device according to the matching signal.

2. The wireless fingerprint card according to claim 1 further comprising a printed circuit board on which the CPU, the fingerprint scanning device, the fingerprint identification device, the wireless communication device, the information input device and the storage device are mounted.

3. The wireless fingerprint card according to claim 2 further comprising one or more batteries provided on the printed circuit board.

4. The wireless fingerprint card according to claim 2, wherein the information input device includes a plurality of touch-sensitive buttons made of capacitive sensors, and the information is input by pressing the touch-sensitive buttons.

5. The wireless fingerprint card according to claim 4 further comprising a housing for containing the printed circuit board therein.

6. The wireless fingerprint card according to claim 5, wherein the housing is made of a Mylar film.

7. The wireless fingerprint card according to claim 5, wherein the housing comprises an input keyboard, and a plurality of numerical or alphabetic characters are printed on the input keyboard, in which each of the numerical or alphabetic characters corresponds to one of the touch-sensitive buttons respectively.

8. The wireless fingerprint card according to claim 7, wherein the housing further comprises an aperture for containing the fingerprint scanning device mounted on the printed circuit board.

9. The wireless fingerprint card according to claim 7 comprising one or more light emitting diodes provided below the touch-sensitive buttons for illuminating the characters on the housing.

10. The wireless fingerprint card according to any one of claims 1-9 further comprising a charge module connected to the CPU, the fingerprint scanning device, the fingerprint identification device, the wireless communication device, the information input device and the storage device.

11. The wireless fingerprint card according to claim 10 further comprising an induction coil connected to the charge module.

12. The wireless fingerprint card according to any one of claims 1-9, wherein the storage device comprises a public storage unit for storing public data and a secure storage unit for storing data on authorized users.

13. The wireless fingerprint card according to claim 12 further comprising a microelectronic switch for controlling the connection and disconnection of the secure storage unit with the CPU.

14. The wireless fingerprint card according to any one of claims 1-9 further comprising a power input device coupled to the CPU, through which an external power source supplies power to the wireless fingerprint card.

15. The wireless fingerprint card according to any one of claims 1-9, wherein the wireless communication device is a bluetooth communication module.

## Amended claims

### Amended claims in accordance with Rule 137(2) EPC.

**1.** A wireless fingerprint card, comprising a CPU (101), a fingerprint scanning device (102), a wireless communication device (106), an information input device (105) and a storage device (104), wherein:
the wireless communication device (106), the information input device (105) and the storage device (104) are coupled to the CPU (101) respectively,
the fingerprint scanning device (102) is arranged to scan fingerprint of users and to transmit scanned fingerprint data to the CPU (101), and then the CPU (101) is arranged to send an information input for further processing,
**characterized by** a fingerprint identification device (103) also coupled to the CPU (101), and the fingerprint scanning device (102) being coupled to the fingerprint identification device (103); wherein the fingerprint scanning device (102) is arranged to scan fingerprint of users and to transmit scanned fingerprint data to the fingerprint identification device (103), and the fingerprint identification device (103) is arranged to compare the scanned fingerprint data to fingerprint data stored in the storage device (104) and to send a matching signal to the CPU (101) if the scanned fingerprint data match the stored fingerprint data, where after the CPU (101) is arranged to send an information input command to the information input device (105) and to transmit information input from the information input device (105) to a transaction terminal through the wireless communication device (106) according to the matching signal.

**2.** The wireless fingerprint card according to claim 1 further comprising a printed circuit board (201) on which the CPU (101), the fingerprint scanning device (102), the fingerprint identification device (103), the wireless communication device (106), the information input device (105) and the storage device (104) are mounted.

**3.** The wireless fingerprint card according to claim 2 further comprising one or more batteries (801) provided on the printed circuit board (201).

**4.** The wireless fingerprint card according to claim 2, wherein the information input device (105) includes a plurality of touch-sensitive buttons (204) made of capacitive sensors, arranged to enable input of information by pressing the touch-sensitive buttons.

**5.** The wireless fingerprint card according to claim 4 further comprising a housing (202, 203) for containing the printed circuit board (201) therein.

**6.** The wireless fingerprint card according to claim 5, wherein the housing (202, 203) is made of a Mylar film.

**7.** The wireless fingerprint card according to claim 5, wherein the housing comprises an input keyboard (208), and a plurality of numerical or alphabetic characters are printed on the input keyboard (208), in which each of the numerical or alphabetic characters corresponds to one of the touch-sensitive buttons (204) respectively.

**8.** The wireless fingerprint card according to claim 7, wherein the housing (202) further comprises an aperture (207) for containing the fingerprint scanning device (102) mounted on the printed circuit board (201).

**9.** The wireless fingerprint card according to claim 7 comprising one or more light emitting diodes (301) provided below the touch-sensitive buttons (204) for illuminating the characters on the housing (202).

**10.** The wireless fingerprint card according to any one of claims 1-9 further comprising a charge module (401) connected to the CPU (101), the fingerprint scanning device (102), the fingerprint identification device (103), the wireless communication device (106), the information input device (105) and the storage device (104).

**11.** The wireless fingerprint card according to claim 10 further comprising an induction coil (402) connected to the charge module (401).

**12.** The wireless fingerprint card according to any one of claims 1-9, wherein the storage device (104) comprises a public storage unit (701) for storing public data and a secure storage unit (702) for storing data on authorized users.

**13.** The wireless fingerprint card according to claim 12 further comprising a microelectronic switch for controlling the connection and disconnection of the secure storage unit (702) with the CPU (101).

**14.** The wireless fingerprint card according to any one of claims 1-9 further comprising a power input device (205) coupled to the CPU (101), through which an external power source may supply power to the wireless fingerprint card (201).

**15.** The wireless fingerprint card according to any one of claims 1-9, wherein the wireless communication device (106) is a blue tooth communication module.
